# FASCICULE DE BREVET EUROPEEN

(11) **EP 2 686 706 B1**
(45) Date de publication et mention de la délivrance du brevet: **08.04.2020**
(21) Numéro de dépôt: 12707797.2
(22) Date de dépôt: 12.03.2012
(51) Int. Cl.: G01T 1/40, G01T 7/00

(54) **DISPOSITIF DE SPECTROMÉTRIE PHOTONIQUE, PROCÉDÉ CORRESPONDANT ET UTILISATION DU DISPOSITIF**
PHOTONENSPEKTROMETER, ENTSPRECHENDES VERFAHREN UND VERWENDUNG DER VORRICHTUNG
PHOTONIC SPECTROMETRY DEVICE, CORRESPONDING METHOD, AND USE OF THE DEVICE

(30) Priorité: 14.03.2011 FR 1152071
(43) Date de publication de la demande: 22.01.2014
(73) Titulaire: FRAMATOME, 92400 Courbevoie (FR)
(72) Inventeur: BERRUYER, Eric, 26270 Loriol-sur-Drôme (FR)
(74) Mandataire: Lavoix
(86) Numéro de dépôt international: PCT/EP2012/054222
(87) Numéro de publication internationale: WO 2012/123392

(56) Documents cités:
- EP-A2- 0 256 902
- EP-A2- 1 927 995
- GB-A- 1 226 924
- GB-A- 2 460 159
- US-A- 3 009 062
- US-A1- 2009 166 539
- Glenn F Knoll: "Calibration and linearity of a multichannel analyser" In: "Radiation detection and measurement", 26 January 2000 (2000-01-26), Wiley, New York, NY [u.a.], XP055444478, ISBN: 978-0-471-07338-3 pages 702-704,

## Description

La présente invention concerne un dispositif de spectrométrie photonique, du type comprenant au moins un capteur propre à détecter des photons, au moins une source étalon émettrice de photons possédant une raie spectrale de référence et des moyens de traitement propres à fournir pour le ou chaque capteur un spectre de mesures correspondant aux mesures par le ou chaque capteur des rayonnements d'un produit pendant un intervalle de temps et à établir à partir du ou de chaque spectre de mesures un spectre net corrigé en fonction d'une raie caractéristique mesurée correspondant à la ou chaque source étalon.

La production ou le recyclage de combustible nucléaire conduit à la production de coproduits, de déchets ou d'effluents. Il convient de vérifier que la teneur en matières radioactives de ces coproduits, déchet ou effluents est acceptable au regard de seuils réglementaires.

Par exemple, l'oxyde d'uranium (UxOy), et notamment le dioxyde d'uranium (UO2), est utilisé comme combustible nucléaire. L'oxyde d'uranium est obtenu par exemple par conversion d'hexafluorure d'uranium (UF₆) en oxyde d'uranium. La conversion est réalisée par exemple dans un four par circulation à contrecourant de poudre d'hexafluorure d'uranium et d'eau (H2O). Un tel procédé de fabrication est décrit dans FR 2 771 725.

Cette conversion génère de l'acide fluorhydrique (HF) en tant que coproduit valorisable. Il convient de contrôler que la concentration en uranium dans l'acide fluorhydrique ne dépasse par des seuils réglementaires définis par l'autorité de sûreté nucléaire.

Pour ce faire, il est possible d'effectuer régulièrement des prélèvements et de les faire analyser par un laboratoire, par exemple à l'aide d'un spectromètre de masse, par un spectrophotomètre d'absorption moléculaire...

Néanmoins, de telles analyses nécessitent la mise en oeuvre par des personnels qualifiés d'appareillages de laboratoire perfectionnés coûteux à acheter, à entretenir et à exploiter. Elles nécessitent une durée pouvant varier de plusieurs dizaines de minutes à une journée selon les préparations nécessaires et le type de mesure réalisée. Elles sont effectuées à intervalles de temps réguliers mais espacés. Ces analyses sont mal adaptées à la surveillance d'un processus industriel continu et imposent dans ce cas de réaliser des stockages intermédiaires et des traitements par lots sur certaines étapes du procédé industriel.

EP0256902A2 divulgue un dispositif de comptage de rayons gamma comprenant une source de référence.

Glenn F Knoll: "Calibration and linearity of a multichannel analyser" In: "Radiation détection and measurement", Wiley, New York, NY [u.a.], ISBN: 978-0-471-07338-3, pages 688-690, 26 janvier 2000 divulgue la calibration d'un spectromètre avec des sources étalon.

US3009062A divulgue un dispositif d'analyse comprenant un bloc de matériau modérateur de neutron muni de puits dans lesquels sont disposés des échantillons, une source de neutrons et des détecteurs de neutrons pour compter les neutrons, le nombre de neutrons atteignant les détecteurs étant fonction des échantillons.

Un but de l'invention est de proposer un dispositif de spectrométrie photonique adapté à la surveillance de processus industriels.

A cet effet, l'invention propose un dispositif de spectrométrie photonique selon la revendication 1. Des caractéristiques optionnelles du dispositif de spectrométrie photonique sont définies aux revendications 2 à 5.

L'invention concerne également un procédé de spectrométrie photonique selon la revendication 6. Des caractéristiques optionnelles de ce procédé de spectrométrie photonique sont définies aux revendications 7 et 8.

L'invention concerne encore l'utilisation d'un dispositif de spectrométrie photonique selon la revendication 9.

L'invention et ses avantages seront mieux compris à la lecture de la description qui va suivre, donnée uniquement à titre d'exemple, et faite en référence aux dessins annexés sur lesquels :
- la figure 1 est une vue schématique illustrant un dispositif de spectrométrie photonique conforme à l'invention ;
- la figure 2 est une vue schématique d'un spectromètre photonique du dispositif de spectrométrie photonique de la figure 1 ;
- les figures 3 et 4 sont des vues en coupe et de dessus d'un ensemble de détection du dispositif de la figure 1 ;
- la figure 5 est un diagramme illustrant un spectre obtenu à l'aide d'un spectromètre du dispositif de spectrométrie photonique de la figure 1 ;
- les figures 6 à 8 sont des vues schématiques d'installations de production ou de recyclage de combustible nucléaire incorporant un dispositif de spectrométrie photonique selon l'invention.

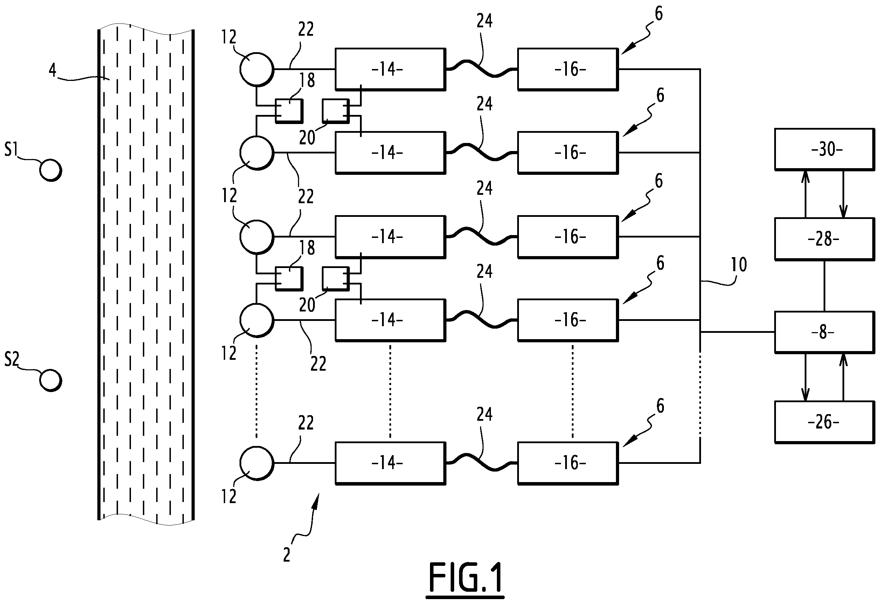

Le dispositif de spectrométrie photonique 2 illustré sur la figure 1 est propre à mesurer les rayonnements émis par un produit 4.

Le dispositif de spectrométrie photonique 2 comprend plusieurs spectromètres 6 photoniques et un module électronique de traitement 8, ci-après « module de traitement ». Le dispositif de spectrométrie photonique 2 comprend un bus 10 d'échange de données reliant le module de traitement 8 à la sortie de chaque spectromètre 6.

Chaque spectromètre 6 est propre à établir un spectre du nombre de photons détectés pendant un intervalle de temps ou intervalle de mesure, en fonction de l'énergie des photons détectés. Chaque spectromètre 6 est conçu pour assurer la linéarité de sa réponse (spectre en énergie) par rapport à l'information présentée à son entrée (énergie de chaque photon).

Chaque spectromètre 6 comprend un unique capteur 12 de rayonnements, un module électronique de détection et de quantification 14, ci-après « module de détection », et un module électronique d'analyse 16, ci-après «module d'analyse », associés.

Le capteur 12 est propre à détecter des photons gamma, appelés aussi rayons gamma, et/ou des photons X, appelés aussi rayons X, et à émettre pour chaque photon détecté un signal de sortie électrique proportionnel à l'énergie du photon détecté. Le capteur 12 est alimenté en énergie électrique par une source d'énergie électrique haute tension 18.

Le module de détection 14 reçoit en entrée le signal de sortie du capteur 12 associé et délivre en sortie un signal numérique représentatif de la valeur de l'énergie de chaque photon détecté par le capteur 12. Le module de détection 14 est alimenté en énergie électrique par une source d'énergie électrique basse tension 20.

Le module d'analyse 16 est propre à compter les signaux émis par le module de détection 14, chaque signal correspondant à un photon détecté par le capteur 12, et à établir un spectre de mesures de la quantité de photons détectés par le capteur 12 en fonction de l'énergie (keV) pour un intervalle de mesure.

Le capteur 12, le module de détection 14 et le module d'analyse 16 sont séparés et reliés entre eux par des liaisons de transmission de données. Le capteur 12 fournit en sortie un signal électrique. L'entrée du module de détection 14 est reliée à la sortie capteur 12 par une liaison filaire 22. Le module de détection 14 émet un signal de sortie numérique optique. L'entrée du module d'analyse 16 est reliée à la sortie du module de détection 14 par une liaison optique 24, typiquement une fibre optique.

Les spectromètres 6 sont propres à fonctionner simultanément et à traiter simultanément les photons émis par le produit 4.

Le module de traitement 8 est relié à la sortie de chaque spectromètre 6 par le bus 10. Le module de traitement 8 est configuré pour effectuer un traitement spécifique des spectres de mesures acquis simultanément sur le même intervalle de temps et établis par les spectromètres 6 afin de pouvoir délivrer un spectre global représentatif déterminé à partir de l'ensemble des spectres de mesures.

Le module de traitement 8 est relié à une interface homme/machine 26 pour l'affichage de résultats et/ou la réception d'instructions.

Le module de traitement 8 est relié à une unité de pilotage 28 apte à utiliser le résultat fourni par le module de traitement 8 pour piloter une installation 30, par exemple une installation de production ou de recyclage de combustible nucléaire ou une installation d'évacuation d'effluents d'une usine de production et/ou de recyclage de combustible nucléaire.

Les spectromètres 6 sont identiques. Les capteurs 12 des spectromètres 6 sont identiques, les modules de détection 14 des spectromètres 6 sont identiques et les modules d'analyse 16 des spectromètres 6 sont identiques.

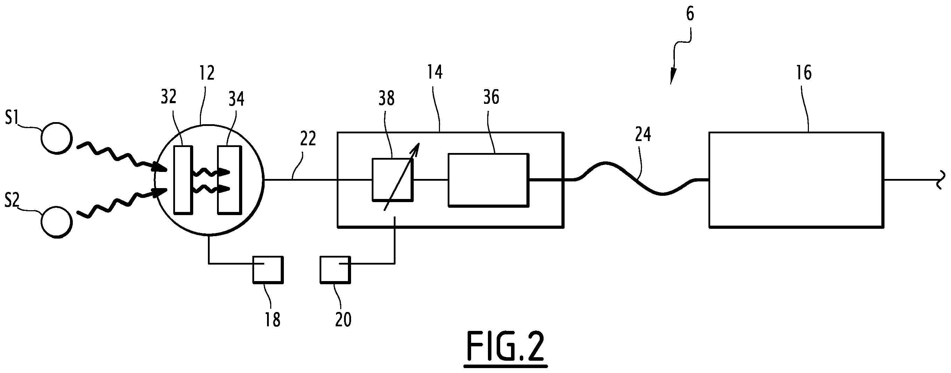

Tel que représenté sur la figure 2 illustrant un spectromètre 6, le capteur 12 de chaque spectromètre 6 est un capteur à scintillation. Il comprend un cristal 32 scintillateur par exemple un scintillateur inorganique de type alcalin halide dopé tel que par exemple Nal(Tl) ou de type composé minéral tel que LaBr₃(Ce) et un photomultiplicateur 34 couplé optiquement au cristal 32. Lorsqu'un photon est absorbé par le cristal 32, celui-ci émet un signal lumineux dont l'énergie est proportionnelle à celle du photon absorbé. Le photomultiplicateur 34 délivre en sortie un signal électrique proportionnel à l'énergie lumineuse émise par le cristal 32.

Le capteur 12 délivre donc, en sortie, un signal électrique analogique proportionnel à l'énergie libérée par le photon dans le cristal 32.

Le module de détection 14 comprend un convertisseur analogique/numérique 36 pour convertir le signal d'entrée analogique en signal de sortie numérique.

Le module de détection 14 est réglable de façon à ajuster le signal de sortie du module de détection 14 en fonction du signal d'entrée qu'il reçoit. Pour ce faire le module de détection 14 comprend un régulateur proportionnel 38 propre à appliquer un coefficient de multiplication au signal qu'il reçoit. Le régulateur proportionnel 38 est réglable de manière à pouvoir régler le coefficient multiplicateur.

En revenant à la figure 1, le dispositif de spectrométrie photonique 2 comprend au moins deux sources étalons S1, S2 associées à la pluralité de spectromètres 6. Chaque source étalon S1, S2 émet un spectre de photons déterminé. Les sources étalons S1, S2 émettent des spectres de photons différents. De préférence, chaque source étalon S1, S2 émet un spectre présentant une raie spectrale caractéristique autour d'une énergie de référence ou raie de référence, et les sources étalons S1, S2 possèdent une ou des raies de référence à des énergies de référence différentes.

Les sources étalons S1, S2 sont disposées de façon à assurer une irradiation identique de chaque capteur 12 de chaque spectromètre 6. Par exemple, pour assurer une irradiation identique, chaque source étalon S1, S2 est disposée à équidistance des capteurs 12 des spectromètres 6. En d'autres termes les spectromètres 6 utilisent au moins deux sources étalons S1, S2 communes.

Les sources étalons S1, S2 sont séparées des spectromètres 6 et en particulier du capteur 12 de chaque spectromètre 6. Chaque spectromètre 6 est donc associé à au moins deux sources étalons S1, S2 séparées du capteur 12 de ce spectromètre 6.

Le module de traitement 8 est propre à analyser individuellement chaque spectre de mesures pendant un intervalle de mesure donné de façon à comparer, pour chaque spectromètre 6, la raie spectrale caractéristique mesurée correspondant à chaque source étalon S1, S2 à la raie de référence correspondante, à calculer les constantes des fonctions affines à appliquer pour faire coïncider les raies spectrales caractéristiques mesurées des sources S1, S2 avec leurs raies de références, à appliquer les fonctions affines en tout point du domaine spectral pour recaler le spectre de mesures et déterminer ainsi un spectre net correspondant et enfin à sommer le spectre net issu de chacun des spectromètres 6 pour obtenir le spectre global.

Le recalage est effectué en énergie et/ou en efficacité. Le recalage en énergie consiste à déterminer une fonction affine pour faire correspondre l'énergie de la raie spectrale caractéristique mesurée correspondant à chaque source étalon S1 et S2 à l'énergie de la raie de référence de chaque source étalon S1, S2. Le recalage en efficacité consiste à déterminer une fonction affine pour faire correspondre le nombre de photons détectés de la raie spectrale caractéristique mesurée correspondant à chaque source étalon S1 et S2 au nombre de photons attendu - correspondant à l'efficacité de détection initiale du capteur 12 du spectromètre 6 concerné - pendant l'intervalle de mesure.

Le module de traitement 8 recevant les spectres de mesures et/ou le module d'analyse 16 établissant les spectres de mesures est/sont avantageusement propre(s) à les stocker au moins temporairement. Ceci permet de consulter les spectres de mesures par exemple à des fins de qualification ou de contrôle ou en cas d'anomalie ou d'incident de fonctionnement.

Des moyens de traitement sont formés par le module de traitement 8 propres à déterminer un spectre net à partir de chacun des spectres de mesures fournis par les spectromètres 6 et à déterminer un spectre global résultant de la sommation des spectres nets.

Dans une variante, le module d'analyse 16 de chaque spectromètre 6 est propre à établir le spectre de mesures et à réaliser son traitement pour déterminer le spectre net correspondant. Dans ce cas, les moyens de traitement sont formés par le module d'analyse 16 de chaque spectromètre 6 et par le module de traitement 8 qui reçoit les spectres nets déterminés par les modules d'analyse 16 et réalise leur sommation pour obtenir le spectre global.

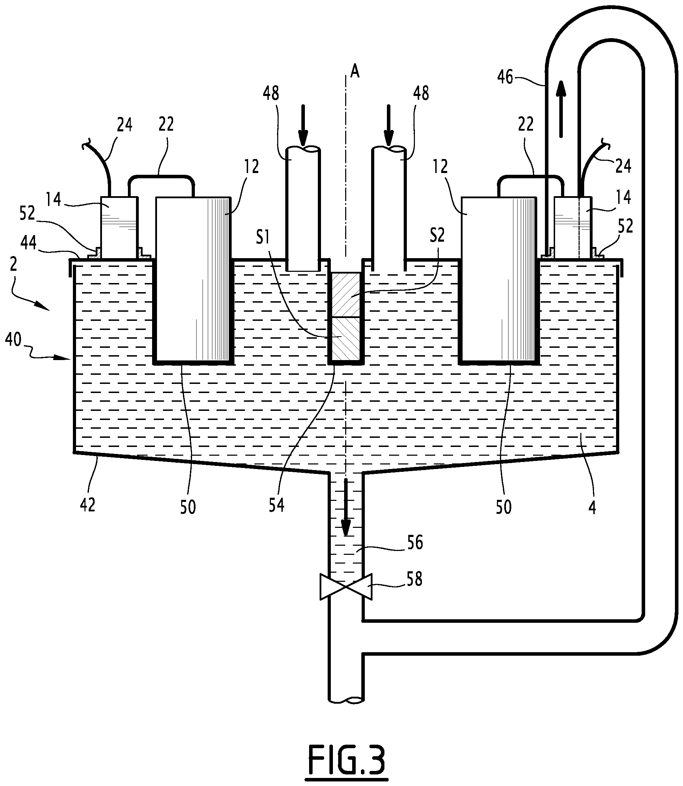

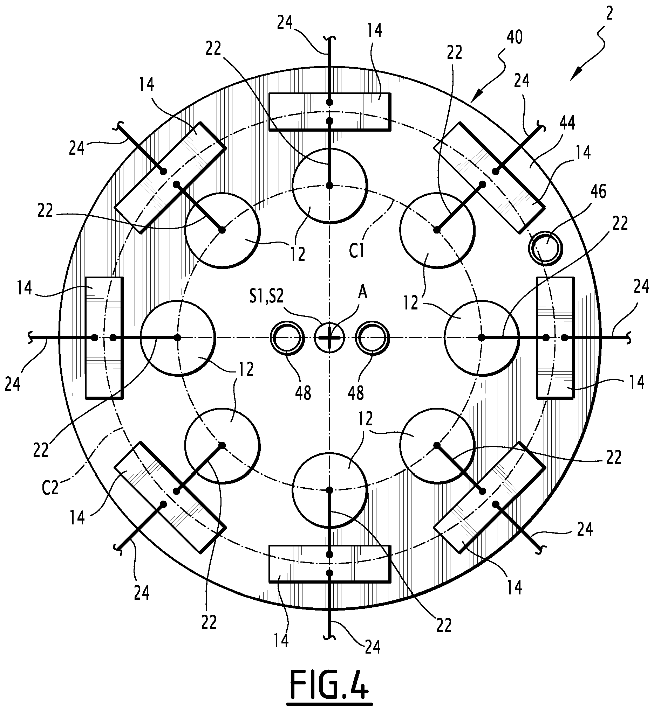

Tel qu'illustré sur les figures 3 et 4, les capteurs 12 sont régulièrement répartis suivant un cercle de capteurs C1 imaginaire centré sur un axe de symétrie A. Tel qu'illustré sur la figure 4, les capteurs 12 sont au nombre de 8 et répartis autour de l'axe A, avec la même valeur métrique de rayon et suivant un pas angulaire régulier égal à 45°.

Les sources étalons S1, S2 sont disposées au centre du cercle de capteur C1. Chaque source étalon S1, S2 se situe donc à équidistance des capteurs 12. Il en résulte que chaque capteur 12 reçoit statistiquement sensiblement la même quantité de photons en provenance des sources étalons S1, S2, durant un même intervalle de mesure.

Le dispositif de spectrométrie photonique 2 comprend un pot 40 de circulation du produit 4 à contrôler, présentant une symétrie de révolution autour de l'axe de symétrie A. Il en résulte que chaque capteur 12 reçoit statistiquement sensiblement la même quantité de photons en provenance du produit 4 présent dans le pot 40.

Les capteurs 12 sont disposés sur le pot 40 de façon que l'espace de réception du produit 4 dans le pot 40 se situe entre les capteurs 12 et autour des capteurs 12. Ceci assure une bonne irradiation des capteurs 12 par les photons émis par le produit 4.

Tel qu'illustré sur les figures 3 et 4, le pot 40 comprend une cuve 42 de section circulaire s'étendant suivant l'axe de symétrie A et un couvercle 44 de contour circulaire fermant, hermétiquement si nécessaire, la cuve 42.

Le couvercle 44 est de forme générale circulaire. Le couvercle 44 comprend au moins un dispositif de remplissage 48 disposé à proximité du centre du couvercle 44 coïncidant avec l'axe A et assurant le remplissage rapide du pot 40 et au moins un dispositif de déverse 46 positionné à la périphérie du couvercle 44 et assurant l'évacuation du trop-plein du pot 40. Tel qu'illustré sur les figures 3 et 4, lorsque plusieurs dispositifs de remplissage 48 sont présents, les dispositifs de remplissage 48 sont espacés et régulièrement répartis suivant un cercle centré sur l'axe A. Selon la configuration de l'installation 30, le dispositif de remplissage 48 peut également être disposé sur une face latérale ou sur la face inférieure de la cuve 42.

La cuve 42 comprend au moins un dispositif de vidange 56 s'alimentant au point le plus bas de la cuve 42 et assurant le vidage du pot 40 commandé par la vanne d'évacuation 58. Tel qu'illustré sur la figure 3, la cuve 42 comprend un dispositif de vidange 56 s'alimentant au centre du fond de la cuve 42.

Le couvercle 44 comprend une pluralité d'alvéoles de capteur 50 faisant saillie vers l'intérieur du pot 40 et ouvertes vers l'extérieur du pot 40. Chaque alvéole de capteur 50 définit dans le couvercle 44 un logement de réception d'un capteur 12. Les alvéoles de capteur 50 sont disposées suivant le cercle de capteurs C1. Les alvéoles de capteur 50 sont angulairement régulièrement réparties autour de l'axe A.

Le couvercle 44 comprend une pluralité de dispositifs de maintien 52 de module de détection 14 ouverts vers l'extérieur du pot 40. Chaque dispositif de maintien 52 définit en saillie sur l'extérieur du couvercle 44 un logement de réception d'un module de détection 14. Les dispositifs de maintien 52 sont disposés suivant un cercle de modules de détection C2 imaginaire centré sur l'axe A. Les dispositifs de maintien 52 sont angulairement régulièrement répartis autour de l'axe A.

Le couvercle 44 comprend une alvéole de source étalon 54 centrée sur l'axe A. L'alvéole de source étalon 54 est disposée entre les dispositifs de remplissage 48. Les sources étalons S1, S2 sont disposées dans l'alvéole de source étalon 54. Chaque source étalon S1, S2 se situe au centre du cercle de capteurs C1 suivant lequel sont disposés les capteurs 12.

Le pot 40 est disposé à proximité d'une installation 30. L'ensemble de détection formé par le pot 40 de mesurage, les capteurs 12 et leurs modules de détection 14 associés est alimenté en produit 4 à contrôler, par une voie directe ou par une voie dérivée (voie parallèle) de l'installation 30.

Le pot 40 est par exemple disposé en sortie d'un four de production d'uranium et d'acide fluorhydrique, sur une sortie d'acide fluorhydrique liquide, dans une pièce confinée.

Les modules de détection 14 disposés à proximité des capteurs 12 permettent d'utiliser des liaisons filaires 22 courtes entre les modules de détection 14 et les capteurs 12, afin de maximiser le rapport signal sur bruit en détection.

Les modules d'analyse 16 associés aux modules de détection 14 et aux capteurs 12 peuvent être placés à l'extérieur de la pièce confinée. La liaison optique 24 par fibre optique assure une transmission de données d'un débit élevé et fiable sur des distances élevées, par exemple de plusieurs dizaines de mètres.

En fonctionnement, pendant un intervalle de temps déterminé, les spectromètres 6 mesurent simultanément les photons émis par le produit 4 présent dans le pot 40 de mesurage. Chaque spectromètre 6 fournit un spectre de mesures. Après recalage individuel de chaque spectre de mesures pour déterminer un spectre net, le module de traitement 8 additionne les spectres nets pour déterminer un spectre global résultant de la sommation des spectres nets. A partir du spectre global, le module de traitement 8 détermine une ou plusieurs mesures, par exemple une concentration d'uranium 235 dans le produit 4.

Le dispositif de spectrométrie photonique 2 permet de remplacer une mesure réalisée par un appareillage de laboratoire sur un échantillon du produit 4 sur une période de temps T, par n mesures (n>1) simultanées sur le produit 4 en sortie d'installation 30, réalisées par plusieurs spectromètres 6 tout en garantissant un résultat de même précision statistique acquis sur une durée plus courte, pouvant être, par exemple, réduite à T/n.

Le dispositif de spectrométrie photonique 2 permet de réaliser des mesures satisfaisantes sur un intervalle de mesure de quelques minutes, par exemple de 1 à 5 minutes, alors que les techniques classiques d'échantillonnage et d'analyse à l'aide d'appareillages de laboratoire nécessitent plusieurs dizaines de minutes voire plusieurs heures et, selon le produit à prélever, une intervention humaine en milieu éventuellement à risques telle qu'une zone confinée.

Le dispositif de spectrométrie photonique 2 permet donc de réaliser des mesures très rapidement, sur un intervalle de mesure compatible avec la surveillance d'un processus industriel ou le pilotage d'un processus industriel.

Néanmoins, la spectrométrie est une mesure de type statistique. Tous les photons émis par le produit 4 pendant l'intervalle de mesure ne sont pas nécessairement détectés. Chaque capteur 12 ne détecte qu'une partie des photons qui atteignent le capteur 12.

Le principe de l'addition des mesures fournies par différents spectromètres 6 ne peut être considéré comme physiquement justifié que si le dispositif de spectrométrie photonique 2 vérifie le principe d'ergodicité.

Cela signifie en pratique que les différentes voies de mesurage d'une même grandeur doivent pouvoir être considérées comme identiques ou sensiblement identiques de façon à fournir des résultats identiques ou suffisamment identiques dans les mêmes conditions de mesurage.

Pour satisfaire à cette condition ou au moins s'en approcher de manière suffisante, le dispositif de spectrométrie photonique 2 comprend plusieurs spectromètres 6 identiques.

En pratique, du fait des tolérances de fabrications inévitables, les capteurs 12, bien qu'étant identiques, présentent une dispersion et, placés dans les mêmes conditions, fournissent des mesures différentes.

La valeur des signaux fournis par un capteur 12 dépend en outre de son alimentation haute tension. La modification même faible en valeur relative du voltage de cette alimentation haute tension modifie sensiblement la valeur des signaux fournis. L'ajustement de ce voltage individuellement pour chaque capteur 12 pourrait permettre en théorie de calibrer les capteurs 12, mais cet ajustement individuel impose une source d'énergie électrique haute tension 18 spécifique par capteur 12 et n'est pas industriel du fait de la maintenance importante qu'il implique. Pour répondre aux contraintes d'un procédé industriel, il est préférable de conserver une valeur de haute tension unique, ce qui permet éventuellement l'emploi d'une seule source d'énergie électrique haute tension 18 pour l'ensemble des capteurs 12. Tous les capteurs 12 étant alimentés par la même valeur de haute tension, les signaux délivrés seront alors différents de par les différences de gain et de rendement de détection de chaque capteur 12.

Selon un aspect de l'invention, le capteur 12 de chaque spectromètre 6 est couplé au module de détection 14 associé de ce spectromètre 6. Le capteur 12 et le module de détection 14 associé sont calibrés conjointement.

Selon un mode de réalisation, le module de détection 14 de chaque spectromètre 6 est réglé initialement de façon que les signaux fournis par les différents couples capteur 12 / module de détection 14 soient identiques et linéaires ou sensiblement identiques et linéaires dans les mêmes conditions de mesure.

Avantageusement, chaque couple capteur 12 / module de détection 14 est réglé en ajustant le gain du photomultiplicateur 34 couplé au cristal 32 du capteur 12 puis en réglant le module de détection 14, par exemple en réglant le régulateur proportionnel 38 du module de détection 14.

Ainsi, selon l'invention, le réglage s'effectue au niveau de chaque couple capteur 12 / module de détection 14, et non au niveau de chaque capteur 12. Ceci permet de tenir compte de la dispersion entre les capteurs 12 et entre les modules de détection 14 et d'assurer que chaque spectromètre 6 fournit sensiblement le même spectre net en présence d'une même source de rayonnements.

Le réglage initial de chaque spectromètre 6 est effectué par exemple en présence d'au moins une source étalon S1, S2. Le régulateur proportionnel 38 du module de détection 14 est réglé de façon que les signaux de sortie fournis par le module de détection 14 correspondent aux valeurs attendues en présence de la source étalon S1, S2.

Il en résulte que chaque capteur 12 et le module de détection 14 associé à celui-ci forment un couple indissociable. Deux modules de détection 14 ne peuvent être intervertis sans intervertir les deux capteurs 12 associés et un capteur 12 ne peut être remplacé sans lui associer son module de détection propre 14.

Les capteurs 12 sont alimentés par la même valeur de haute tension et sont avantageusement alimentés par la même source d'énergie électrique haute tension 18. Ceci simplifie l'alimentation des capteurs 12 et les opérations de maintenance. Pour d'autres raisons tel que le principe de redondance mis en oeuvre dans les installations nucléaires, comme illustré sur la figure 1, il est possible de prévoir une source d'énergie électrique haute tension 18 commune à, par exemple, deux capteurs 12. Sur la figure 1, les spectromètres 6 sont groupés par deux, les deux capteurs 12 des spectromètres 6 de chaque groupe étant alimentés par la même source d'énergie électrique haute tension 18.

Chaque capteur 12 peut présenter une dérive au cours du temps et les capteurs 12 peuvent présenter des dérives différentes.

Selon un aspect de l'invention, le dispositif de spectrométrie photonique 2 comprend au moins deux sources étalon S1, S2 commune aux différents spectromètres 6 pour la correction de dérive des capteurs 12. Les capteurs 12 sont disposés de manière symétrique autour de chaque source étalon S1, S2. Ainsi, la correction de dérive des capteurs 12 est effectuée à partir de la même source étalon S1, S2 ce qui est une garantie supplémentaire pour le respect du principe d'ergodicité.

La dérive de chaque capteur 12 est corrigée par recalage de chaque spectre de mesures en fonction de la raie spectrale caractéristique mesurée correspondant à chaque source étalon S1, S2 et de la raie de référence de chaque source étalon S1, S2 de façon à déterminer un spectre net des rayonnements émis par le produit 4 et chaque source étalon S1, S2.

Selon un aspect de l'invention, le dispositif de spectrométrie photonique 2 comprend au moins une source étalon S1 possédant une énergie de référence supérieure à celle d'un élément à détecter.

L'isotope 235 de l'uranium présente entre autres une émission de photons gamma caractéristique à la valeur de 185,7 keV. Un dispositif de spectrométrie photonique 2 adapté à la détection de l'isotope 235 de l'uranium comprend par exemple une source étalon en césium 137 présentant une émission de photons gamma caractéristique de référence à la valeur de 662 keV dont l'influence sur les comptes pour l'énergie 185,7 keV, c'est-à-dire les résultats du comptage sur l'intervalle de mesure fournis par le module d'analyse 16, est facilement rendue négligeable.

En assurant que chaque voie spectrométrique présente une caractéristique de linéarité de réponse, il est possible de corriger le spectre de mesures en fonction de la différence entre la valeur mesurée pour une source étalon et la valeur de référence de la source étalon. Une erreur - en valeur relative - de X% sur la mesure de la valeur de référence de la source étalon entraîne une correction - en valeur relative - de X% de toutes les valeurs mesurées.

Il en résulte qu'une petite dérive de mesure en valeur absolue sur l'énergie de référence d'une source étalon entraîne une correction plus grande en valeur absolue sur toutes les mesures d'énergies supérieures à celle de la source étalon et une correction plus petite en valeur absolue sur toutes les mesures d'énergies inférieures à celle de la source étalon. Cela entraîne que pour une incertitude de mesure donnée, l'incertitude est plus élevée pour toutes les mesures d'énergies supérieures à celle de la source étalon et est inférieure pour toutes les mesures d'énergies inférieures à celle de la source étalon.

Le choix d'une source étalon d'énergie supérieure à celle d'un élément à détecter permet donc de minimiser les incertitudes de mesure en valeur absolue dans les plages d'énergie correspondant à celle de l'élément à détecter.

Selon un aspect de l'invention le dispositif de spectrométrie photonique 2 comprend deux sources étalons S1 et S2 possédant des raies spectrales caractéristiques dont les énergies de référence sont différentes.

De préférence, les énergies de références des sources étalons S1 et S2 sont choisies de façon à présenter une énergie d'émission qui se situe pour l'une d'entre elles à une des deux extrémités de la bande d'analyse spectrale en énergie d'un spectromètre 6 et pour l'autre d'entre elles à l'autre extrémité de la bande d'analyse spectrale en énergie du même spectromètre 6. Ainsi, avec deux sources fournissant deux énergies différentes et les plus distantes possibles sur l'étendue spectrale d'analyse, la correction est optimale pour l'ensemble des photons détectables sur cette bande d'analyse en énergie.

L'isotope 235 de l'uranium présente entre autres une émission de photons gamma caractéristique à la valeur de 185,7 keV. Un dispositif de spectrométrie photonique 2 adapté à la détection de l'uranium 235 comprend par exemple une source étalon en américium 241 présentant une énergie de référence de 59.5 keV et donc une raie de référence sur le spectre en énergie autour de l'abscisse 60 keV et une source étalon en césium 137 présentant une énergie de référence de 662 keV et donc une raie de référence sur le spectre en énergie autour de l'abscisse 662 keV.

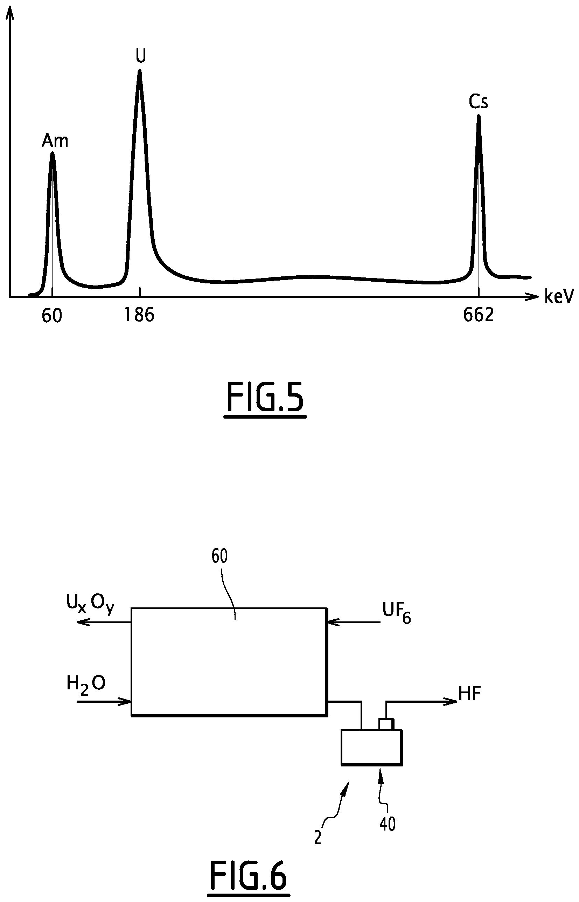

La figure 5 illustre un exemple de spectre pouvant être obtenu en présence d'une source étalon d'américium 241, d'une source étalon de césium 137 et d'un échantillon contenant de l'uranium 235. L'abscisse représente l'énergie en keV des photons reçus et l'ordonnée le nombre de photons détectés.

La correction de dérive est effectuée en corrigeant chaque spectre de mesures en fonction de la raie spectrale caractéristique mesurée et de la raie de référence de chaque source étalon S1, S2, ce qui garantit une correction plus précise.

Les fonctions affines de recalage sont déterminées de façon que les raies caractéristiques mesurées des sources étalons S1, S2 utilisées coïncident, en énergie et en comptage, avec les raies de référence respectives des sources étalons S1, S2 puis appliquées à chaque point du spectre de mesures.

La plupart des capteurs de photons comprennent une source étalon - par exemple américium 241 - placée dans le capteur scellé voire scellée au cristal lors de leur fabrication. Soumises à la législation sur les sources scellées, les sources étalons ont une durée de vie réglementaire limitée. La source et donc le capteur doivent être détruits à la fin de la durée de vie réglementaire, quelle que soit l'état du capteur, ce qui limite la durée de vie du capteur. De même, si un capteur est défectueux, le capteur complet est remplacé et la source étalon est détruite avec le capteur.

L'utilisation d'une source étalon associée à un capteur mais physiquement séparée du capteur permet de limiter le coût de fonctionnement de l'ensemble en limitant le coût de remplacement d'un capteur et en permettant de conserver le capteur même si la source étalon doit être remplacée et vice versa. Cela permet en outre d'utiliser une même source étalon pour plusieurs capteurs, ce qui permet non seulement de limiter le coût de l'ensemble de mesure mais également d'assurer une meilleure adéquation à la contrainte d'ergodicité d'un dispositif utilisant plusieurs capteurs simultanément.

Dans un mode de réalisation, au moins une fonction de recalage pour le recalage des spectres de mesures d'un spectromètre 6 est déterminée pour chaque spectre de mesures fourmi par le spectromètre 6. En variante, au moins une fonction de recalage pour le recalage des spectres de mesures d'un spectromètre 6 est déterminée à partir d'au moins un spectre de mesures de référence du spectromètre 6 de façon à faire coïncider, pour chaque source étalon S1, S2, une raie spectrale caractéristique du spectre de mesures de référence avec la raie spectrale de référence de cette source étalon S1, S2. La ou chaque fonction de recalage est utilisée pour recaler plusieurs spectres de mesures successifs du spectromètre 6. La ou chaque fonction de recalage est déterminée périodiquement selon une périodicité qui dépend de la stabilité du spectromètre 6. La périodicité peut être de l'ordre du jour, de la semaine ou plus.

Les figures 6 à 8 illustrent schématiquement des installations industrielles 30 utilisant un dispositif de spectrométrie photonique 2 selon l'invention pour contrôler la teneur en radio-isotopes de coproduit et d'effluents de rejet.

La figure 6 illustre une installation de conversion d'hexafluorure d'uranium en oxyde d'uranium comprenant un four 60 recevant, entre autres, en entrée de l'hexafluorure d'uranium UF₆ et de l'eau H₂O circulant à contre-courant dans le four 60, et fournissant en sortie de l'oxyde d'uranium UₓO_{y} en tant que produit et de l'acide fluorhydrique HF en tant que coproduit.

Tel qu'illustré, le pot 40 du dispositif de spectrométrie photonique 2 est disposé en série sur une sortie d'acide fluorhydrique après condensation en HF liquide de façon à vérifier que la teneur de l'acide fluorhydrique en uranium 235 est inférieure aux seuils réglementaires.

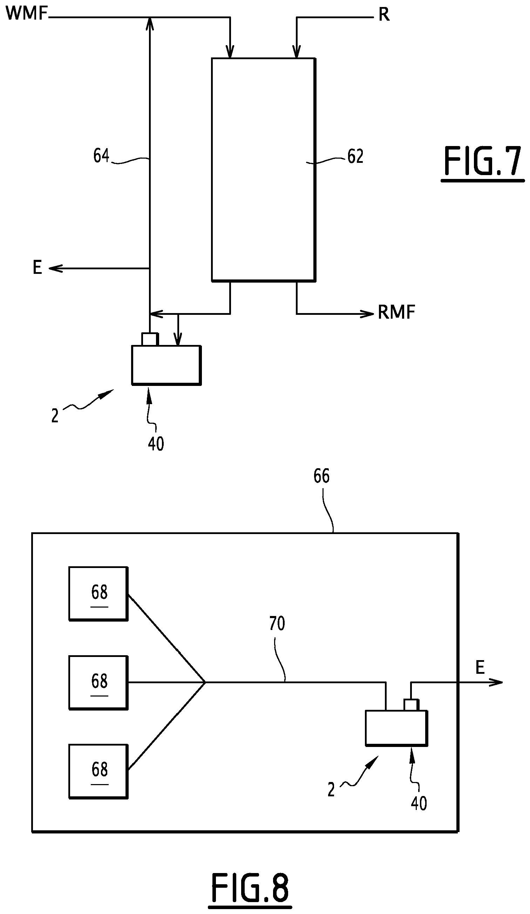

La figure 7 illustre une installation de recyclage de matières radioactives comprenant un réacteur 62 recevant en entrée des déchets contenant de la matière radioactive WMF et des réactifs R propres à précipiter la matière radioactive, et fournissant en sortie de la matière radioactive recyclée RMF et des effluents E.

Tel qu'illustré, le pot 40 du dispositif de spectrométrie photonique 2 est disposé en dérivation (en parallèle) sur une sortie d'effluents E de façon à vérifier que la teneur des effluents E en radio-isotopes, par exemple certains radio-isotopes du thorium, l'uranium 235, le plomb 212,..., ou en d'autres impuretés radioactives issues par exemple de la mise en oeuvre d'uranium issu du traitement de combustibles irradiés, dit uranium de retraitement, de plutonium... est inférieure aux seuils réglementaires.

L'installation de recyclage comprend une conduite de recirculation 64 s'étendant entre la sortie du pot 40 de mesurage du dispositif de spectrométrie photonique 2 et l'entrée en déchets WMF, de sorte que les effluents E sont recyclés tant qu'ils présentent une teneur en un ou plusieurs radio-isotopes trop élevée.

La figure 8 illustre un ensemble de traitement de matières radioactives 66 comprenant plusieurs installations 68 de traitement de matières radioactives produisant des effluents E, collectés dans un circuit d'évacuation en vue de leur rejet.

Le dispositif de spectrométrie photonique 2 est disposé dans le circuit de rejet de façon à vérifier que les effluents E collectés présentent une teneur en radio-isotopes conformes aux seuils réglementaires de rejet.

Le dispositif de spectrométrie photonique 2 est installé dans une conduite principale 70 pour effectuer les mesures sur l'ensemble des effluents E ou sur une conduite de dérivation pour effectuer les mesures sur une fraction des effluents E collectés.

Il est possible d'utiliser le dispositif de spectrométrie photonique 2 de façon à déterminer l'origine d'une pollution des effluents par de la matière radioactive. En effet, en fonction du processus industriel à l'origine par exemple d'une pollution à l'uranium, des éléments chimiques caractéristiques du processus mis en oeuvre peuvent être associés à l'uranium. Par exemple, une présence de plomb 212 en association avec de l'uranium 235 est le signe d'une pollution provenant d'une installation utilisant de l'uranium de retraitement.

Ainsi, selon un aspect de l'invention, le module de traitement 8 du dispositif de spectrométrie photonique 2 est configuré pour déterminer à partir du spectre global la présence de radio-isotopes en sus, par exemple, de l'uranium 235.

De façon générale, le choix de la mise en oeuvre du dispositif de spectrométrie photonique 2 en série ou en dérivation sur une sortie du produit 4 à contrôler dépend de l'installation 30 et du débit du produit en ligne de sortie.

Selon une option, le module de traitement 8 comprend une mémoire dans laquelle sont stockés des spectres de référence caractéristiques de certains types de pollution, et est configuré pour, par exemple, émettre une alerte ou déclencher un arrêt de l'installation 30 en cas de correspondance d'un spectre net avec un spectre de référence préenregistré.

Grâce à l'invention, il est possible d'effectuer des mesures rapides de rayonnements gamma et/ou X compatibles avec la surveillance ou le pilotage de processus industriels. Le dispositif de spectrométrie photonique est réalisable à partir d'éléments du commerce et peut être disposé *in situ* à proximité ou dans une installation pour contrôler les produits fournis par cette installation et/ou piloter l'installation.

L'invention s'applique en particulier à la mesure de la teneur en uranium 235 en sortie de processus de fabrication de combustible nucléaire à base d'uranium ou de processus de recyclage d'uranium. De manière générale, l'invention s'applique à la mesure de la teneur en tout élément radioactif.

L'invention s'applique pour la mesure de tout rayonnement gamma ou X. Les spectromètres de l'invention sont des spectromètres photoniques gamma et/ou X selon le scintillateur utilisé.

## Revendications

1. Dispositif de spectrométrie photonique (2), comprenant plusieurs capteurs (12) identiques, chaque capteur (12) étant propre à détecter des photons, au moins deux sources étalons (S1, S2) émettrices de photons possédant des raies spectrales de référence différentes, chaque capteur (12) recevant statistiquement sensiblement une même quantité de photons en provenance de chaque source étalon (S1, S2) pour un même intervalle de temps, et des moyens de traitement (8, 16) propres à fournir pour chaque capteur (12) un spectre de mesures correspondant aux mesures par le capteur (12) des rayonnements d'un produit (4) et de chaque source étalon (S1, S2) pendant un intervalle de temps et à établir un spectre net à partir de chaque spectre de mesures, par recalage de chaque spectre de mesures de façon à faire coïncider, pour chaque source étalon (S1, S2), une raie spectrale caractéristique mesurée par chaque capteur (12) avec la raie spectrale de référence de cette source étalon (S1, S2).

2. Dispositif de spectrométrie photonique selon la revendication 1, dans lequel les moyens de traitement (8, 16) sont propres à établir chaque spectre net par recalage du ou de chaque spectre de mesures par au moins une fonction affine de recalage déterminée de façon à faire coïncider, pour chaque source étalon (S1, S2), une raie spectrale caractéristique mesurée par le capteur (12) avec la raie spectrale de référence de cette source étalon (S1, S2).

3. Dispositif de spectrométrie photonique selon la revendication 1, dans lequel les sources étalons (S1, S2) sont disposées à l'extérieur du ou de chaque capteur (12).

4. Dispositif de spectrométrie photonique selon l'une quelconque des revendications précédentes, comprenant un pot (40) de mesurage pour la circulation d'un fluide à l'intérieur du pot (40), le pot (40) comprenant à l'extérieur du pot (40) un logement de réception de chaque source étalon (S1, S2) et un logement de réception respectif de chaque capteur (12).

5. Dispositif de spectrométrie photonique selon l'une quelconque des revendications précédentes, comprenant deux sources étalons (S1, S2) possédant des raies spectrales de référence encadrant une raie spectrale caractéristique d'un élément à détecter, notamment l'uranium 235.

6. Procédé de spectrométrie photonique comprenant les étapes de :
- établir des spectres de mesures à partir de signaux de mesure fournis par plusieurs capteurs (12) sensibles aux photons en présence d'un produit (4) émettant des rayonnements et d'au moins deux sources étalons (S1, S2) possédant des raies spectrales de référence différentes, un spectre de mesure respectif étant établi pour chaque capteur (12), chaque capteur (12) recevant statistiquement sensiblement une même quantité de photons en provenance de chaque source étalon (S1, S2) pour un même intervalle de temps ;
- établir un spectre net à partir de chaque spectre de mesure par recalage du spectre de mesure par au moins une fonction de recalage déterminée de façon à faire coïncider, pour chaque source étalon (S1, S2), une raie spectrale caractéristique mesurée par le capteur (12) et avec la raie spectrale de référence de cette source étalon (S1, S2).

7. Procédé de spectrométrie photonique selon la revendication 6, dans lequel on mesure les rayonnements en présence de deux sources étalons (S1, S2), et on établit chaque spectre net par recalage d'un spectre de mesures par au moins une fonction affine, en fonction du recalage de chaque source étalon (S1, S2).

8. Procédé de spectrométrie photonique selon la revendication 6 ou la revendication 7, dans lequel on établit un spectre global comme la sommation de spectres nets obtenus par recalage des spectres de mesures établis par des mesures simultanées d'un même produit (4) émettant des rayonnements durant le même intervalle de temps par lesdits plusieurs capteurs (12) identiques.

9. Utilisation d'un dispositif de spectrométrie photonique selon l'une quelconque des revendications 1 à 5, pour mesurer la teneur en uranium d'acide fluorhydrique résultant de la fabrication d'oxyde d'uranium, pour mesurer la teneur en au moins un radio-isotope des effluents d'une installation de recyclage de matières radioactives ou pour mesurer avant rejet la teneur en au moins un radio-isotope des effluents d'une usine de traitement de matières radioactives.

## Patentansprüche

1. Photonenspektrometrie-Vorrichtung (2), aufweisend mehrere identische Sensoren (12), wobei jeder Sensor (12) imstande ist, Photonen zu detektieren, mindestens zwei Standardquellen (S1, S2), welche Photonen aussenden, welche unterschiedliche Referenzspektrallinien haben, wobei jeder Sensor (12) statistisch im Wesentlichen eine gleiche Anzahl an Photonen aus jeder Standardquelle (S1, S2) für einen gleichen Zeitraum empfängt, und Verarbeitungsmittel (8, 16), welche imstande sind, für jeden Sensor (12) ein Messspektrum zu liefern, welches zu Messungen mittels des Sensors (12) von Strahlung eines Erzeugnisses (4) und jeder Standardquelle (S1, S2) während eines Zeitraums korrespondiert, und ausgehend von jedem Messspektrum ein Nettospektrum zu ermitteln mittels Korrigierens jedes Messspektrums, sodass, für jede Standardquelle (S1, S2), eine charakteristische Spektrallinie, welches mittels jedes Sensors (12) gemessen wird, mit der Referenzspektrallinie dieser Standardquelle (S1, S2) übereinstimmt.

2. Photonenspektrometrie-Vorrichtung (2) gemäß Anspruch 1, wobei die Verarbeitungsmittel (8, 16) imstande sind, jedes Nettospektrum zu ermitteln mittels Korrigierens des oder jedes Messspektrums mittels mindestens einer linearen Korrekturfunktion, welche so bestimmt ist, dass, für jede Standardquelle (S1, S2), eine charakteristische Spektrallinie, welche mittels des Sensors (12) gemessen wird, mit der Referenzspektrallinie dieser Standardquelle (S1, S2) übereinstimmt.

3. Photonenspektrometrie-Vorrichtung gemäß Anspruch 1, wobei die Standardquellen (S1, S2) außerhalb des oder jedes Sensors (12) angeordnet sind.

4. Photonenspektrometrie-Vorrichtung gemäß irgendeinem der vorherigen Ansprüche, aufweisend ein Behältnis (40) zum Messen für das Zirkulieren eines Fluids im Inneren des Behältnisses (40), wobei das Behältnis (40) außen am Behältnis (40) eine Unterbringung zum Aufnehmen jeder Standardquelle (S1, S2) und eine jeweilige Unterbringung zum Aufnehmen jedes Sensors (12) aufweist.

5. Photonenspektrometrie-Vorrichtung gemäß irgendeinem der vorherigen Ansprüche, aufweisend zwei Standardquellen (S1, S2), welche Referenzspektrallinien haben, welche eine charakteristische Spektrallinie eines zu detektierenden Elements, insbesondere Uranium 235, einfassen.

6. Verfahren zur Photonenspektrometrie, aufweisend die Schritte des:
- Erstellens von Messspektren ausgehend von Messsignalen, welche mittels mehrerer Sensoren (12), welche auf Photonen empfindlich sind, bereitgestellt werden in Anwesenheit eines Erzeugnisses (4), welches Strahlung aussendet, und mindestens zweier Standardquellen (S1, S2), welche unterschiedliche Referenzspektrallinien haben, wobei ein jeweiliges Messspektrum für jeden Sensor (12) ermittelt wird, wobei jeder Sensor (12) statistisch im Wesentlichen eine gleiche Anzahl an Photonen aus jeder Standardquelle (S1, S2) für einen gleichen Zeitraum empfängt,
- Ermitteln eines Nettospektrums ausgehend von jedem Messspektrum mittels Korrigierens des Messspektrums mittels mindestens einer Korrekturfunktion, welche so bestimmt ist, dass, für jede Standardquelle (S1, S2), eine charakteristische Spektrallinie, welche mittels des Sensors (12) gemessen wird, mit der Referenzspektrallinie dieser Standardquelle (S1, S2) übereinstimmt.

7. Verfahren zur Photonenspektrometrie gemäß Anspruch 6, wobei man die Strahlung in Anwesenheit von zwei Standardquellen (S1, S2) misst und man jedes Nettospektrum ermittelt mittels Korrigierens eines Messspektrums mittels mindestens einer linearen Funktion, in Abhängigkeit von dem Korrigieren jeder Standardquelle (S1, S2).

8. Verfahren zur Photonenspektrometrie gemäß Anspruch 6 oder Anspruch 7, wobei man ein globales Spektrum ermittelt als die Addition von Nettospektren, welche erlangt werden mittels Korrigierens von Messspektren, welche ermittelt werden mittels gleichzeitigen Messens eines gleichen Erzeugnisses (4), welches Strahlung emittiert, während des gleichen Zeitraums mittels der besagten mehreren identischen Sensoren (12).

9. Verwendung einer Photonenspektrometrie-Vorrichtung gemäß irgendeinem der Ansprüche 1 bis 5 zum Messen des Uran-Gehalts von Fluorwasserstoffsäure, die sich bei der Herstellung von Uranoxid ergibt, zum Messen des Gehalts von mindestens einem Radioisotop der Abwässer einer Wiederverwertungsanlage für radioaktive Stoffe oder zum Messen des Gehalts von mindestens einem Radioisotop der Abwässer einer Anlage zur Verarbeitung radioaktiver Stoffe vor der Ableitung.

## Claims

1. A photonic spectrometry device (2), comprising several identical sensors (12), each sensor (12) being capable of detecting photons, at least two photon-emitting calibrating sources (S1, S2) having different reference spectral lines, each sensor (12) statistically receiving substantially a same quantity of photons coming from each calibrating source (S1, S2) for a same time interval, and processing means (8, 16) capable of providing, for each sensor (12), a measurement spectrum corresponding to the measurements, made by each sensor (12), of the radiation from a product (4) and each calibrating source (S1, S2) during a time interval and establishing, on the basis of each measurement spectrum, a net corrected spectrum by recalibrating each measurement spectrum so as to make, for each calibrating source (S1, S2), a characteristic spectral line measured by each sensor (12) coincide with the reference spectral line of that calibrating source (S1, S2).

2. The photonic spectrometry device according to claim 1, wherein the processing means (8, 16) are capable of establishing each net spectrum by recalibrating the or each corresponding measurement spectrum using at least one determined recalibration affine function so as to make a measured characteristic line measured by the sensor (12) coincide with the reference spectral line of that calibrating source (S1, S2) for each calibrating source (S1, S2).

3. The photonic spectrometry device according to claim 1, wherein the calibrating sources (S1, S2) are positioned outside the or each sensor (12).

4. The photonic spectrometry device according to any one of the preceding claims, comprising a measurement pot (40) for circulating fluid inside the pot (40), said pot (40) comprising, outside the pot (40), a housing for receiving each calibrating source (S1, S2) and a respective housing for receiving each sensor (12).

5. The photonic spectrometry device according to any one of the preceding claims, comprising two calibrating sources (S1, S2) having reference spectral lines framing a characteristic spectral line of an element to be detected, in particular uranium 235.

6. A photonic spectrometry method comprising the following steps:
- establishing measurement spectra from measurement signals provided by several photon-sensitive sensor (12) in the presence of a product (4) emitting radiation and at least two calibrating sources (S1, S2) having different reference spectral lines, a respective measurement spectrum being established for each sensor (12), each sensor (12) statistically receiving substantially a same quantity of photons coming from each calibrating source (S1, S2) for a same time interval;
- establishing a net spectrum from each measurement spectrum, by recalibrating the measurement spectrum based on at least one recalibration function determined so as, for each calibrating source (S1, S2), to make a characteristic spectral line measured by the sensor (12) coincide with the reference spectral line of that calibrating source (S1, S2).

7. The photonic spectrometry method according to claim 6, wherein the radiation is measured in the presence of two calibrating sources (S1, S2), and each elementary spectrum is established by recalibrating one measurement spectrum using at least one affine function, based on the recalibration of each calibrating source (S1, S2).

8. The photonic spectrometry method according to claim 6 or claim 7, wherein a global spectrum is established as the summation of net spectra obtained by recalibrating the measurement spectra established through simultaneous measurements, by said several identical sensors (12), of a same product (4) emitting radiation during the same time interval.

9. A use of a photonic spectrometry device according to any one of claims 1 to 5 to measure the uranium content of hydrofluoric acid resulting from the manufacture of uranium oxide, to measure the content level of at least one radioisotope of the effluents of a radioactive recycling facility or to measure, before discharge, the content level of at least one radioisotope of the effluents of a radioactive material treatment plant.
